Europäisches Patentamt

European Patent Office

Office européen des brevets

(11) Publication number: **0 341 350**
**A1**

## EUROPEAN PATENT APPLICATION

(21) Application number: 88202815.2

(51) Int. Cl.⁴: **A01F 25/20**

(22) Date of filing: 08.12.88

(30) Priority: 09.05.88 NL 8801220
16.06.88 NL 8801537

(43) Date of publication of application:
**15.11.89 Bulletin 89/46**

(84) Designated Contracting States:
**BE DE FR GB NL**

(71) Applicant: LITECH B.V.
Steenriet 16
NL-7521 PD Enschede(NL)

(72) Inventor: **Liet, Cornelis Hendricus**
**Denekamperdijk 38**
**NL-7581 PJ Losser(NL)**
Inventor: **Liet, Fredericus**
**Wilgenkamp 74**
**NL-7581 HD Losser(NL)**

(74) Representative: **Bruin, Cornelis Willem et al**
**OCTROOIBUREAU ARNOLD & SIEDSMA**
**Sweelinckplein 1**
**NL-2517 GK The Hague(NL)**

(54) **Silage cutter having cooperating rows of teeth having different pitch distances.**

(57) The invention relates to a device for removing silage from a pit comprising a movable cutting member, for example a feed dosing container with silo cutter, a feed (mixing-) dosing wagon with a cutting board which forms part of a loading device, and/or a device for the cutting of silage, having a substantially vertical extending guiding frame and an at least virtually horizontal U-shaped support frame which is movable up and down along this guiding frame and which is provided on each of its three sides with a pair of downward facing cutter plates that are situated close to one another, provided with rows of cutting teeth, co-acting and movable reciprocally relative to one another.

The invention has for its object to improve the cutting action of the known devices and achieves this by providing a device displaying the feature that, of each pair of cutter plates (207,208), one is fixed in position (208) on the support frame and the other cutter plate (207) is movable, and that the pitch distance of the fixed teeth differs from the pitch distance of the movable teeth.

FIG.14

## Silage cutter having cooperating rows of teeth having different pitch distances

The invention relates to a device for removing silage from a pit comprising a movable cutting member, for example a feed dosing container with silo cutter. a feed (mixing-) dosing wagon with a cutting board which forms part of a loading device, and/or a device for the cutting of silage, having a substantially vertical extending guiding frame and an at least virtually horizontal U-shaped support frame which is movable up and down along this guiding frame and which is provided on each of its three sides with a pair of downward facing cutter plates that are situated close to one another, provided with rows of cutting teeth, co-acting and movable reciprocally relative to one another.

Such a silage cutter is known for instance from EP-A-0 264 157 and EP-A-0 102 437.

The silage cutter according to EP-A-0 264 157 has teeth with a blunt lower edge and equal pitch distances. This known device needs a comparatively large amount of power to penetrate into the often hard silage in order to perform the required cutting process through the reciprocating movement of the cutter plates.

The device according to EP-A-0 102 437 makes use of teeth having cutting edges joined to each other at obtuse angles. Use is further made of a toothed holding plate that is fixed in position on the support frame. The pitch distance of the movable teeth is twice as small in this device as that of the holding teeth. These holding teeth have the purpose of keeping the silage as much as possible in position so that the movable teeth can saw through it. In this known device the cutting of the silage is carried out substantially with a sawing operation. A sawing operation is however only efficient if the material concerned is held in place very effectively, which is a problem with the sharp points of the fixed holder blade. If use were to be made of blunt holder teeth, penetration into the silage would be more difficult to effect, which would worsen the operation of the device.

The invention has for its object to improve the cutting action of the known devices and achieves this by providing a device displaying the feature that, of each pair of cutter plates, one is fixed in position on the support frame and the other cutter plate is movable, and that the pitch distance of the fixed teeth differs from the pitch distance of the movable teeth.

In a particular embodiment the device displays the characteristic that the teeth of at least the fixed cutter plate have sharp points with an apex angle of no more than 120°, for instance in the order of 90° or less.

The device can with advantage have the feature that the teeth of the movable cutter plate also have sharp points with an apex angle of no more than 120°, for instance in the order of 90° or less.

It is of advantage when the tooth points of the teeth of both cutter plates of a pair lie at least virtually in the same horizontal plane. Both rows of cutting teeth are consequently of equal value, which results in both cutter plates making a good contribution to the cutting of the silage.

In preference the device displays the feature that the driving of movable cutter plates takes place in such a way that at the ends of each stroke the teeth of co-acting cutter plates are positioned symmetrically relative to the point halfway between the points of teeth that may or may not be successively positioned, such that co-acting cutting edges perform successive scissor-like movements.

Such a scissor-like movement can be performed particularly effectively if at the end of each stroke the teeth are held at rest for a short time relative to the duration of the stroke, such by means of a buffering suitable for this purpose. As a result, when the support frame is set in downward motion, the space between the teeth can always be very well filled with the material for cutting and a real scissor-like movement is carried out very effectively, resulting in the useful effect of the cutting becoming significantly greater.

In a particular embodiment the device has the characteristic that the cutting edges of adjoining teeth of a cutter plate are bounded by a concave surface which is sloping relative to the relevant cutter plate and which is situated on the surface of the relevant cutter plate facing away from the other cutter plate, such that the sloping faces adjoin one another and the relevant cutter plate comes to a sharp point on one side over the whole of the portion furnished with teeth.

Such a form can be obtained in simple manner in an embodiment where a sloping surface possesses the form of a portion of a cylinder surface such that the associated cutting edge has the shape of a part-ellipse. It will be apparent that the described form of the sloping faces and thereby the form of the teeth can be realized through the use of a process using one or more cylindrical cutters.

Simple interchangeability of the plates can be effected if required with an embodiment having the feature that all the teeth of a pair have the same form. Such an embodiment also has the advantage that it is possible to suffice with the same one type of manufacturing device.

The device can advantageously display the feature that the driving of a movable cutter plate is performed by means of a cylinder-piston assembly having a great stroke length relative to the pitch distance of the teeth, such that the cylinder-piston assembly may have a comparatively great length and smaller diameter. With such a construction the smallest possible wedging effect is ensured and the device can move lightly through the mass of silage.

A favourable loading of the driving(s) is achieved with an embodiment having the characteristic that the teeth of the co-acting cutter plates are placed with respect to one another, for example in relatively staggered groups, such that the cutting or scissor action takes place step-wise seen in lengthwise direction.

The invention further relates to components, particularly cutter plates, evidently intended for use in a device according to the invention, as specified above.

The invention is further elucidated hereinafter with reference to the drawing, in which a number of embodiments of the device according to the invention are shown, to which the invention is not restricted.

Fig. 1 shows schematically a perspective view of a first embodiment of a device for cutting of silage according to the invention;

Fig. 2 shows on a larger scale a part of the device from fig. 1;

Fig. 3 shows a section along the line III-III in fig. 2 on a larger scale than in fig. 2;

Fig. 4 shows a section along the line IV-IV in fig. 2 on a larger scale than in fig. 2;

Fig. 5 is a hydraulic diagram of the operation of the device shown in fig. 1;

Fig. 6 shows schematically a perspective view of a second embodiment of a device according to the invention;

Fig. 7 shows on a larger scale a part of the device from fig. 6;

Fig. 8 is a section along the line VIII-VIII in fig. 7;

Fig. 9 shows schematically a perspective view of an embodiment of a device for cutting of silage according to the invention;

Fig. 10 shows, as seen from the inside, a portion of the body of the U-shaped support frame of the device from fig. 1 on a larger scale;

Fig. 11 is a section through the body of the support frame from fig. 1 and fig. 2 along the line III-III;

Fig. 12 shows a detail of a pair of cutter plates in a configuration according to the invention in a first embodiment;

Fig. 13 shows the configuration as in fig. 12 in another position during an operating stroke; and

Fig. 14 shows two cutter plates in another embodiment.

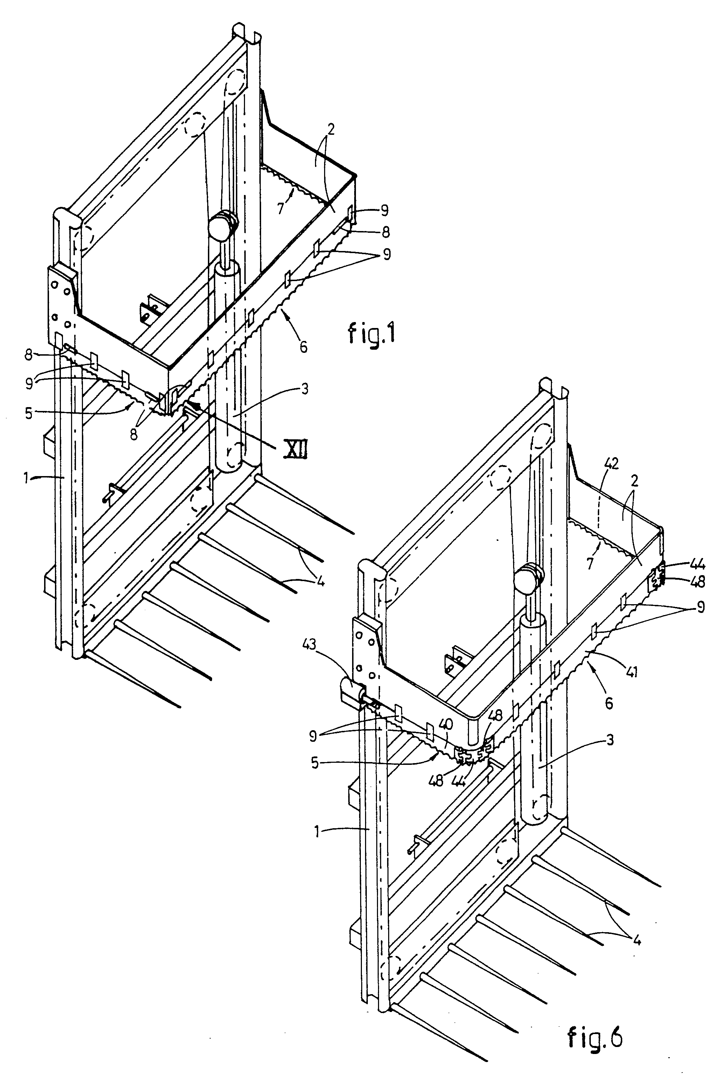

The device shown in fig. 1 for cutting silage possesses a substantially vertical extending guiding frame 1 and an at least virtually horizontal U-shaped support frame 2 that can move up and down along this guiding frame 1. Employed in a manner not further indicated for this up and downward movement of the support frame 2 relative to guiding frame 1 is a cylinder-piston assembly 3. On its lower outer end the guiding frame 1 has bearing teeth 4 for carrying a cut-out block of silage.

No further consideration of the details of the design of the guiding frame 1 is made here since it possesses a conventional construction that is already known.

The device shown in fig. 1 can be mounted in its entirety on the front or rear of a tractor.

The support frame 2 is provided on each of its three sides with a downward directed cutting member 5, 6, 7 that is movable reciprocally in horizontal direction for a cutting action. The reciprocal movement of these cutting members 5, 6, 7 is brought about by cylinder-piston assemblies 8 which are shown only schematically in fig. 1.

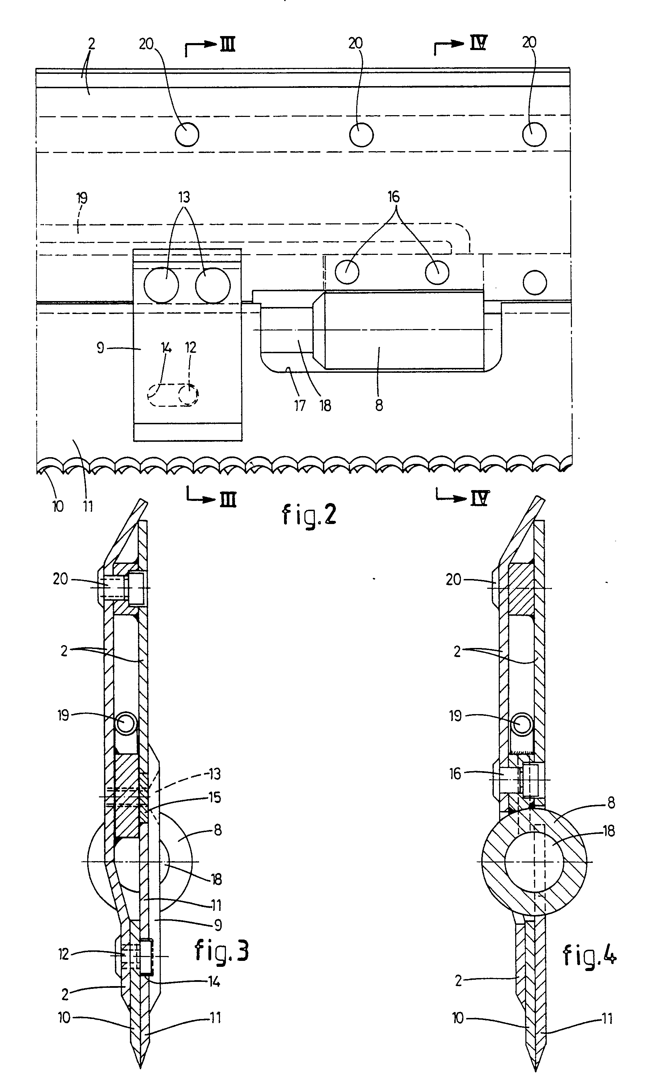

As will be apparent from the figures 2-4 each cutting member comprises two closely adjoining cutter plates 10 and 11, the cutter plate 10 being in fixed connection with the support frame 2. The reciprocally movable cutter plates are locked with respect to support frame 2 by retaining lips 9 which are also only shown schematically in fig. 1. At the bottom the cutter plates 10 and 11 have series of cutting teeth.

Arranged in cutter plates 11 are guide slots 14 which co-operate with attachment members 12 of the fixed cutter plates, in the form for example of socket head screws, arranged in the support frame 2.

Fixed to the support frame 2 for the absorption of the vertical forces acting on the reciprocally movable cutter plate 11 are support portions 15 of bronze or the like which co-act with the upper edge of the reciprocally movable cutter plate 11 facing away from the series of cutting teeth. It is additionally noted that the retaining lips 9 may likewise be made of bronze or the like. Both the retaining lips 9 and the support portions 15 are connected to the support frame 2 by fastening members 13.

The cylinder-piston assemblies 8 already illustrated schematically in fig. 1 are attached to support frame 2 by means of fastening members 16. The movable cutter plates 11 have cut-away portions 17 which accommodate the associated cylinder-piston assemblies. The piston rods 18 of the cylinder-piston assemblies 8 grip with their outer ends onto one of the side edges of each cut-away portion 17. When a cylinder-piston assembly 8 is energised and the piston rod is pressed outward, the outer end of this piston rod 18 presses against the said side edge of the cut-away portion 17 and the movable cutter plate is displaced with respect to the support frame 2.

It is possible for each cylinder-piston assembly to be of the double-action type that can displace a movable cutter plate 11 in one direction as well as the opposing direction. In the embodiment as in fig. 1 however each movable cutter plate 11 is furnished with a pair of single cylinder-piston assemblies 8 acting in opposing directions. Each cylinder-piston assembly 8 can hereby exert a force in only one direction. Through alternate energising of the cylinder-piston assemblies 8 of each pair a reciprocating movement of the movable cutter plate 11 can be achieved.

Also to be seen in the figures 2, 3 and 4 are: an oil line 19 leading to the cylinder-piston assembly 8 and connecting components 20 for assembly of the upper part of support frame 2. Not shown is a protective cover that may optionally be arranged around each cylinder-piston assembly 8.

In order to obtain a good cutting action the series of cutting teeth (as shown in fig. 2) have a tooth pitch equal to or a little smaller than the stroke of both cutter plates 10 and 11 relative to one another (as defined for instance by the length of the groove 14).

Further to be seen is that the tooth points of the series of cutting teeth of both cutter plates 10 and 11 are located at least virtually in the same horizontal plane.

As already explained above the reciprocating movement of cutter plate 11 is obtained by energising in each case the cylinder-piston assemblies 8 belonging to the relevant cutter plate in appropriate manner and at the suitable moment. It is now possible for the cylinder-piston assemblies 8 to be switched on, each in turn, in order to move the relevant cutter plate in a particular direction. Per se known switch-on and switch-off valves can be employed for this purpose. The cylinder-piston assemblies of the various cutter plates can hereby in each case be connected in parallel in suitable manner. This means that the various cutter plates perform a synchronised reciprocal movement.

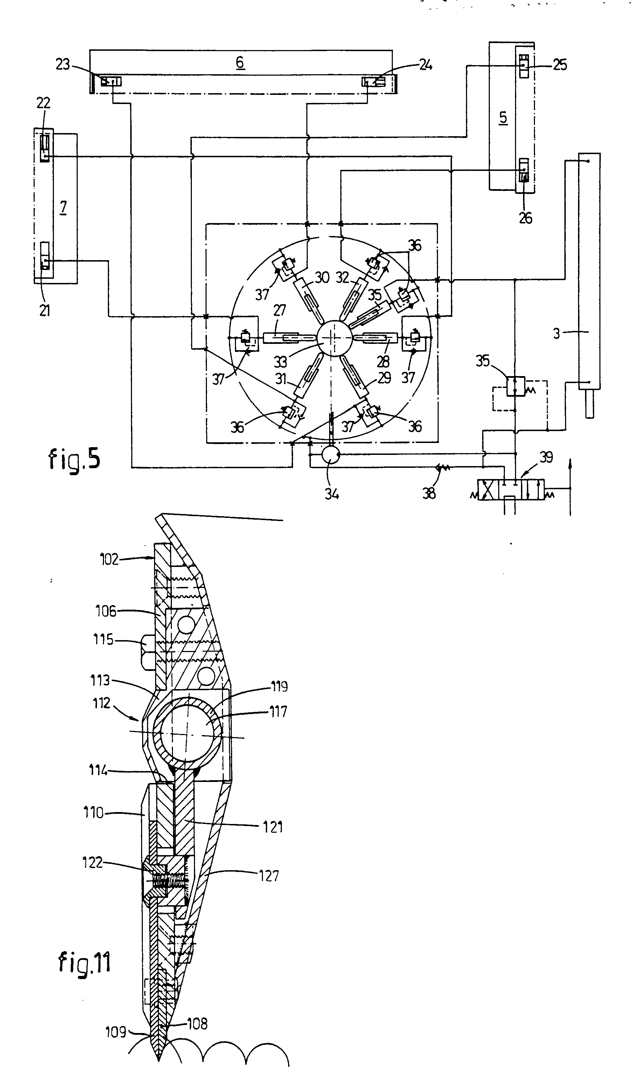

Shown in fig. 5 is a hydraulic working diagram for another way of energising the cylinder-piston assemblies.

The single-action cylinder-piston assemblies of the three cutting members 5-7 are designated with the reference numerals 21-26. Each cylinder-piston assembly 21-26 is connected via a line to the outlet of an associated pump cylinder 27-32. The pump cylinders 27-32 are positioned about an eccentric 33 in the form of a circular disc with an eccentric axis of rotation. The eccentric 33 is driven by a hydromotor 34.

When the eccentric 33 is driven by the hydromotor 34 the pump cylinders 27-32 will be energised via a continuous periodic function, in this case a sine function, whereby the coupling between these pump cylinders and the associated cylinder-piston assemblies 21-26 leads to a similarly continuous periodic energising of these cylinder-piston assemblies. As will be apparent from the diagram in fig. 5 the pump cylinders 27-32 are positioned around the eccentric 33 such that the pump cylinders connected to the cylinder-piston assemblies belonging to one pair are each positioned on opposite facing sides of the eccentric 33. In this way the pump cylinders 27 and 28, 29 and 30, and 31 and 32 are always positioned opposite each other. This ensures that the cylinder-piston assemblies of one pair always differ 180° in phase where energising is concerned. Thus for example when cylinder-piston assembly 21 is pushed out, the cylinder-piston assembly 22 is retracted.

As a result of the choice of the energising function of the cylinder-piston assemblies 21-26, the cutter plates of the cutting members 5-7 are moved reciprocally in a required movement.

Connected to the eccentric 33 is a further pump cylinder 35 which provides the energising of the cylinder-piston assembly 3 (see fig. 1) for the up and downward movement of the support frame 2.

The pump cylinders 27-32 are distributed regularly about the eccentric 33 so that a regular loading is applied thereto. The capacity of the hydromotor 34 can be minimal as a result.

It is of course possible to effect the energising of the three respective pairs of cylinder-piston assemblies 21 and 22, 23 and 24, 25 and 26 by using only two pump cylinders placed opposite one another. The said pairs of cylinder-piston assemblies are connected in parallel in such a case. There also exists the possibility of using more than one pair of cylinder-piston assemblies per cutter plate. A parallel connection may also be employed here.

Further referred to in fig. 5 are: a rapid-action feed 35 for the cylinder-piston assembly 3, safety valves 36, filler valves 37, a biased filler valve 38 in addition to a control valve 39 that can for instance be operated from the tractor.

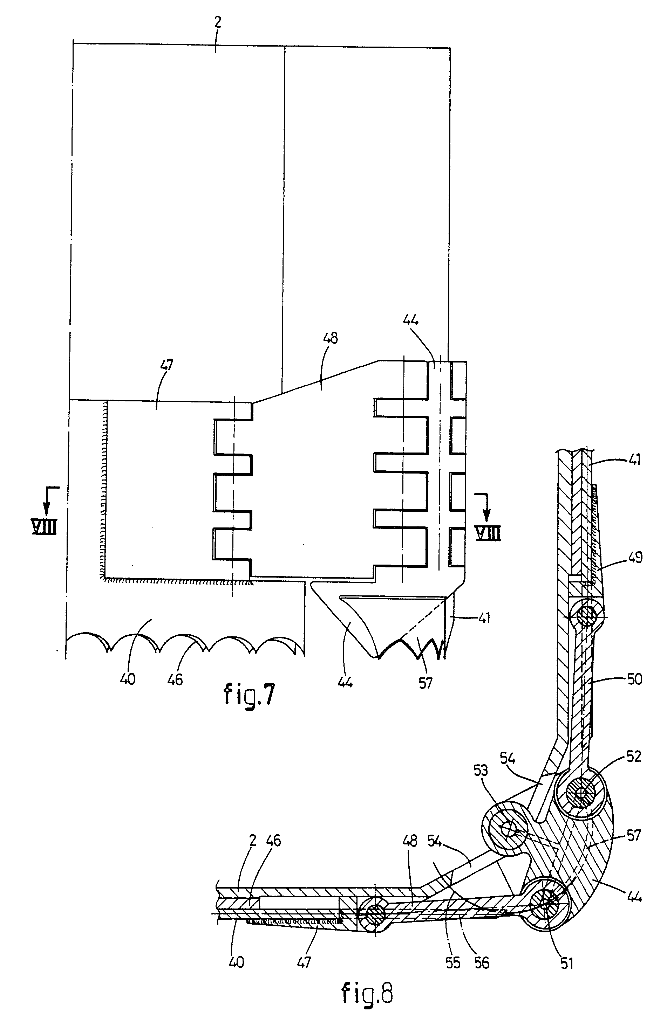

Shown in fig. 6 is a second embodiment of the device according to the invention. This embodiment has a number of similarities to the embodiment shown in fig. 1 and corresponding parts have corresponding reference numerals. The difference between the embodiments in fig. 1 and fig. 6 is a different driving for the reciprocally moving cutter plates.

In accordance with fig. 6 the reciprocally movable cutter plates 40-42 are driven by cylinder-piston assemblies 43 (in the figure only one is shown) arranged at the location of both outer ends of the support frame 2 situated close to the guiding frame 1. Each of these cylinder-piston assemblies 43 is connected to the adjoining movable cutter plate 40 and 42 respectively.

In contrast to the embodiment as in fig. 1, whereby each movable cutter plate has its own cylinder-piston assemblies 8, in the embodiment as according to fig. 6 no other cylinder-piston assemblies are employed in addition to the cylinder-piston assemblies 43. For mutual coupling of the movable cutter plates 40-42 and the synchronising of their reciprocating movement a rocker piece 44 rotatable about an at least virtually vertical rotational axis is placed on both corner points of the support frame 2, in each case between two adjoining movable cutter plates 40 and 41 and 41 and 42. Each adjoining movable cutter plate, respectively 40 and 41 and 41 and 42, is then joined via a connecting component or the like 48 to a point of the rocker piece located outward of the rotational axis.

The placing of the rocker piece 44 and the connecting components 48, which is shown only schematically in fig. 6, is further explained in fig. 7 and 8 using a larger scale. Shown in the side view of fig. 7 is a portion of the reciprocally movable cutter plate 40. Lying behind this cutter plate 40 is the cutter plate 46 that is in fixed connection with support frame 2. Attached to the reciprocally movable cutter plate 40 is a hinge piece 47 to which the connecting part 48 is connected for pivoting. The connecting part 48 is coupled for pivoting with its opposite outside end to the rocker piece 44.

As will be seen in fig. 8, the reciprocally movable cutter plate 41 is provided in similar manner with a hinge piece 49 that is likewise joined to the rocker piece 44 via a connecting component 50. The pivot and attachment points 51 and 52 where the respective connecting parts 48 and 50 are joined to the rocker piece 44 are located outward from the axis of rotation 53 of this rocker piece 44. It is otherwise remarked that, in contrast to the configuration shown, it is also possible for the pivot and attachment points 51 and 52 to coincide at a single point.

In place of the hinged connection between the connecting components 48 and 50 and the respective hinge pieces 47 and 49 it is also possible that each connecting component has quite a great length, is manufactured from spring steel and is fixed to the relevant movable cutter plate 40, 41 respectively. The pivot points between the connecting components and the hinge pieces consequently become superfluous.

The rocker piece 44 is joined at the point of its rotational axis 53 to the support frame 2. In the vicinity of this point of connection a number of recesses 54 are arranged in support frame 2 which serve as discharge openings for silage material displaced by the rocker piece 44.

The point of connection 51 between the connecting component 48 and rocker piece 44 is positioned on rocker piece 44 such that the circular path hereby passed through no more than touches the centre line 56 of the associated movable cutter plate 40. Thus can be prevented that the cutter plate 40 is removed at its outer end from the fixed cutter plate 46 by the connecting part 48. The same applies with respect to the reciprocally movable cutter plates 41 and 42.

As indicated schematically in fig. 7 the rocker piece 44 has on its underside a downward facing cutting blade segment 57 (shown in dashed lines in fig. 8) which runs concentrically to the rotational axis 53, and the cut in the silage caused by this blade segment joins up to the cuts caused by the adjoining movable cutter plates 40 and 41. In this way a continuous cut is obtained, as a result of which a silage block is wholly cut away from the surrounding silage. In addition the rocker piece 44 takes an approximately conical form at its bottom, whereby the point of the cone-shaped bottom is displaced relative to the axis of rotation 53. Thus achieved is that during its reciprocating rotational movement the rocker piece exerts a pushing away action on the silage which results in the vertical movement of the rocker piece 44 relative to the silage being simplified. As this pushing away action takes place the inner flanks of rocker piece 44 press silage through the openings 54 formed in the support frame 2, while the curved exterior of the rocker piece displaces silage outwards.

In a variant of the embodiment shown in fig. 6-8 the rocker piece is placed higher than is shown in fig. 7 and the movable cutter plates have, at the location of their outer ends situated by the rocker piece, a recess on the top for receiving the rocker piece in its high position. The cutter plates are horizontally extended on the underside such that during their reciprocal movement the cuts caused by them intersect each other. In such a variant the rocker piece 44 no longer has a cutting blade segment 57 on its underside. A member for displacing the silage can however be arranged beneath the rocker piece in order to create space for the passage of the rocker piece.

The reciprocating movement of the movable cutter plates 40-42 is now brought about by alternate energising of the cylinder-piston assemblies 43. These cylinder-piston assemblies 43 apply alternately a tensile force to the adjoining cutter plates 40 and 42, this tensile force being transmitted via the connecting components and the rocker pieces to the other cutter plates 41 and 42 and 41 and 40 respectively. These tensile forces generally have a high value so that it can be advantageous to couple the rocker pieces 44 to one another by pull rods at points not coinciding with their rotational axes 53, while in addition the cylinder-piston assemblies 43 are connected to the rocker pieces 44 via other pull rods. In this way it is possible to prevent the tensile strains being exerted on the cutter plates 40-42 assuming too high a value.

In the embodiment as according to fig. 6-8 the energising of the cylinder-piston assemblies can of course be performed in the same way as explained with respect to the embodiment of fig. 1. In this case also a sine-shaped movement or the like of the cutter plates will have a favourable effect.

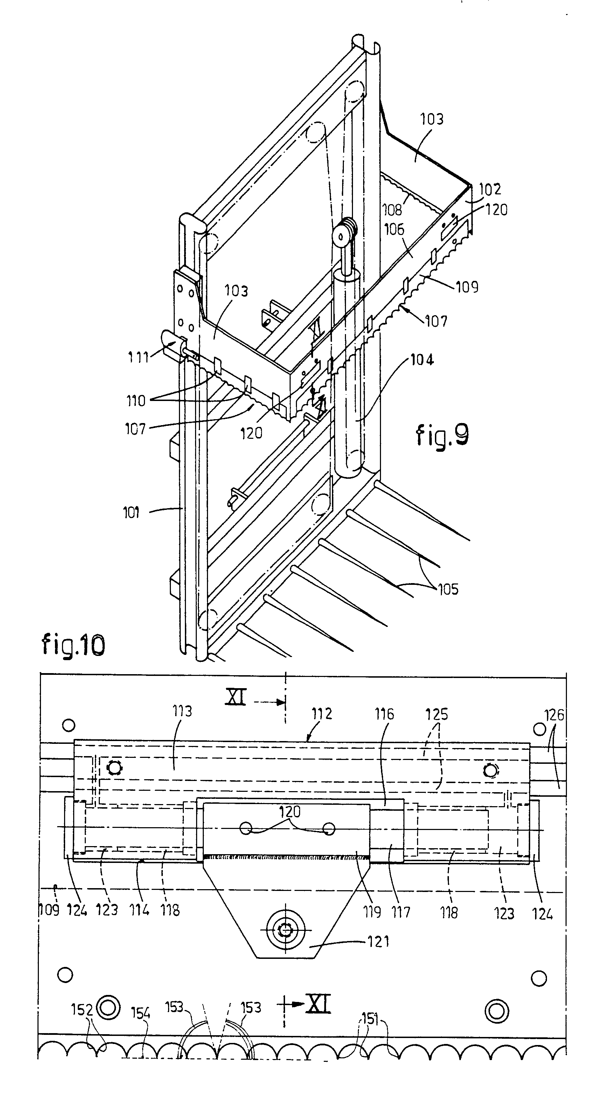

Shown in fig. 9 is a device for cutting silage, which is provided with a substantially vertical standing guiding frame 101 and an at least virtually horizontal U-shaped support frame 102. The support frame 102 is movable with its legs up and down along the guiding frame 101 by means of a cylinder-piston assembly 104. This driving of the support frame is per se known and is therefore not described further. At the lower end the guiding frame 101 comprises bearing teeth 105 for carrying a cut-out block of silage. The device described can be coupled in the usual manner to a tractor.

The U-shaped support frame is provided on each of the legs 103 and on the body 106 with a cutting member 107 which consists in the embodiment shown of a stationary blade 108 and a blade 109 that is reciprocally movable relative to the support frame 102. The moving blade 109 is held in position on the support frame 102 using retaining lips 110. With respect to the construction of the cutting member 107 reference is made to the older Dutch priority application 8801220.

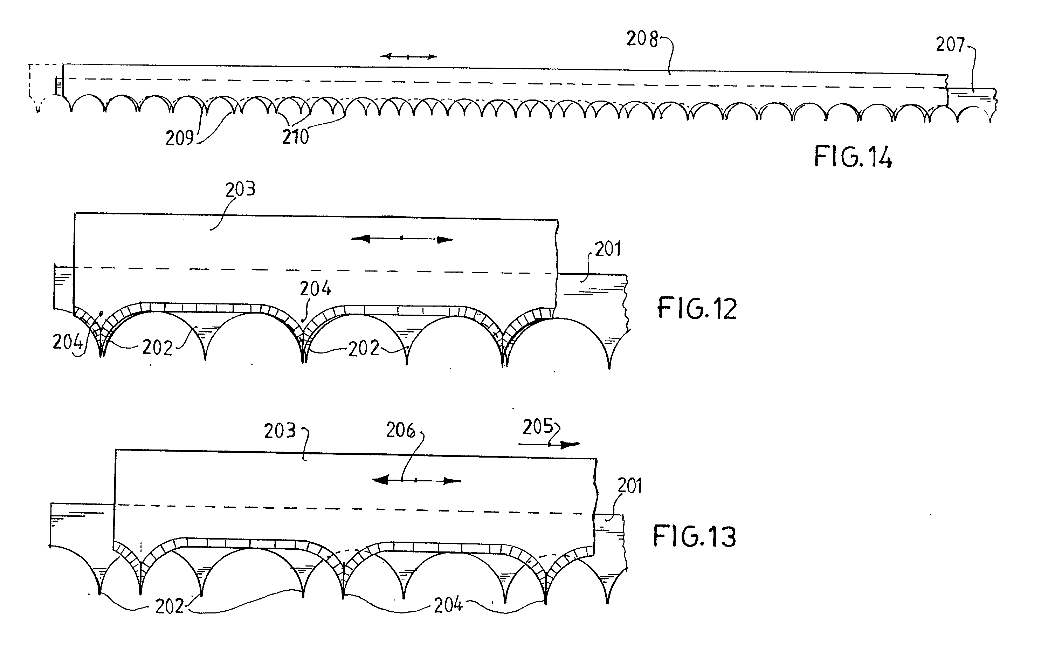

The driving of the movable cutting blade 109 of both legs 103 is provided by a double-action hydraulic cylinder-piston assembly 111, of which only one is shown in fig. 9. The driving of the movable cutting blade 109 of the body 106 is taken care of by two double-action cylinder-piston assemblies 112, one of which is shown in detail in the figures 10 and 11.

Each cylinder-piston assembly 112 is provided with a cylinder housing 113 that protrudes into a recess 114 in the body 106 of the support frame 102. Cylinder housing 113 is fastened to the body 106 using two bolts 115. The cylinder housing 113 has a central opening 116, whereby the piston in the form of a piston rod 117 runs through this central opening and is bearing mounted on either side thereof in elongate guide bushings 118 that are fitted in cylinder housing 113. Guide bushings 118 preferably consist of bronze.

Attached with the aid of locking pins 120 to the part of the piston rod 117 running through the central opening 116 is a casing 119 which encloses piston rod 117 in close fitting manner. Fixed to the casing 119 on the underside is a coupling plate 121. The coupling plate 121 is connected at its lower end to the cutting blade 109 by means of a bolt 122.

As can be seen in fig. 10 the piston rod 117 protrudes at both ends into a chamber 123 situated in cylinder housing 113. The chambers 123 are closed off at the outside by means of a screw cap 124. In addition each chamber 123 can be connected, via its own oil channel 125 and oil line 126 connected thereto, to a hydraulic control system, such that chambers 123 are joined alternately to the pressure and return pipes of a hydraulic power source.

As will also be seen in fig. 10 the teeth 151 display symmetrical points, the cutting edges 152 of which have ends which form angles 153 of more than 30°, and in this embodiment even of almost 90°, with the connecting line 154 between the points 151. The apex angle of the symmetrical teeth is thus smaller here than 120°, and even almost 0°. This form ensures the very effective scissor-like action described in the foregoing. The driving takes place for this purpose in such a way that the movable cutter plates move reciprocally such that at the ends of each stroke the teeth of the movable cutter plate and the teeth of the fixed cutter plate are located symmetrically relative to the point halfway between the points of the teeth. In preference the teeth coincide at least substantially at the ends of each stroke. This latter method of driving in particular ensures that the co-acting cutting edges perform very effective successive scissor-like movements.

As will be particularly clear from fig. 11, each cylinder-piston assembly 112 lies on the inside of the support frame 102 relative to the movable cutting blade 109. As a result a comparatively small force is needed to move the support frame 102 downward through the silage, since the inward protruding cylinder housing 113, which is also protected by a guiding plate 127, can press away the cut-out silage relatively easily.

Because the movable cutting blade 109 is connected in the manner described to the piston rod 117 by means of casing 119 and coupling plate 121, the moments generated during operation by the cutting force are absorbed in the piston rod 117 and the guide bushings 118 and virtually no moments are created in the cutting blade 109. The moment caused by the distance between the centre line of the cutting blade 109 and the centre line of the piston rod 117 in the direction transversely of cutting blade 109 is also absorbed in piston rod 117 and guide bushings 118. This ensures a long useful life of the cutting blade 109. The moments that occur cause hardly any problem for the cylinder-piston assembly 112, since its components can be designed to absorb any moments that occur and good lubrication of the piston rod 117 in the guide bushings 118 is simply carried out.

Although for example only the cutting blade 109 of the body 106 is driven with the cylinder-piston assemblies 112, the cutting blades 109 of the legs 103 can if required also be driven by such cylinder-piston assemblies.

Although in the embodiment described a cylinder-piston assembly 112 is arranged on either side of cutting blade 109 of body 106, it is also possible to dispose one or more cylinder-piston assemblies 112 above one another at least roughly in the middle of the cutting blade 109. In the case of two or more cylinder-piston assemblies 112 situated above each other the cylinder housings 113 thereof can be combined into a common housing. When only one cylinder-piston assembly 112 is employed the piston rod 117 for generating the required forces may have an oval section.

Fig. 12 shows a fixed cutter plate 201 with sharply pointed teeth 202. Co-acting with the fixed, in any case not reciprocally driven, cutter plate 201 is cutter plate 203 reciprocally drivable in the manner indicated above. This cutter plate has sharply pointed teeth 204 which in this random embodiment have the same form as the teeth 202 of the cutter plate 201 and a pitch distance twice as great as the pitch distance of the fixed teeth 202.

Fig. 13 shows the same configuration in a slightly shifted position. Fig. 12 showed the extreme left end position; fig. 13 shows the situation in which the movable cutter plate 203 has shifted over some distance to the right, as according to arrow 205. A double arrow 206 indicates the reciprocating driving of the movable cutter plate 203.

Fig. 14 shows a fixed cutter plate 207 and a movable cutter plate 208 that co-acts therewith. The teeth of both cutter plates 209 and 210 respectively have a slightly varied pitch distance, whereby in accordance with the invention the pitch distance between the teeth 209 is smaller than that between the teeth 210.

It is to be noted that there is a difference in operation between the configurations as in figures 12 and 13 on the one hand and figure 14 on the other.

In the embodiment of fig. 12/13 an effective scissor-like movement takes place through the co-acting cutting edges of the diverse teeth. During the scissor-like movement there is one space free in each case between successive teeth to be filled with silage during the downward pressing of the cutting member into that silage, as a result of which the scissor-like action always takes place in the mass of material. In this respect the stroke of the cutter plate 203 can for instance be roughly as great as the pitch distance between the teeth 204.

In the embodiment shown in fig. 14 this advantage is not to be found, but the scissor-like movement always takes place in a different position of the co-acting cutter plates, resulting in the drive cylinders being very homogeneously loaded during a stroke.

Attention is further drawn to the fact that in the absence of an enlarged stroke the technical advantage can be achieved that the relevant drive cylinder, as specified in the foregoing, may have a greater length and smaller diameter, which could signify a great advantage in view of the described wedging effect of the cutting device in the silage.

## Claims

1. Device for removing silage from a pit comprising a movable cutting member, for example a feed dosing container with silo cutter, a feed (mixing-) dosing wagon with a cutting board which forms part of a loading device, and/or a device for the cutting of silage, having a substantially vertical extending guiding frame and an at least virtually horizontal U-shaped support frame which is movable up and down along this guiding frame and which is provided on each of its three sides with a pair of downward facing cutter plates that are situated close to one another, provided with rows of cutting teeth, co-acting and movable reciprocally relative to one another, **characterized in that,** of each pair of cutter plates, one is fixed in position on the support frame and the other cutter plate is movable, and that the pitch distance of the fixed teeth differs from the pitch distance of the movable teeth.

2. Device as claimed in claim 1, **characterized in that** the teeth of at least the fixed cutter plate have sharp points with an apex angle of no more than 120°, for instance in the order of 90° or less.

3. Device as claimed in claim 2, **characterized in that** the teeth of the movable cutter plate also have sharp points with an apex angle of no more than 120°, for instance in the order of 90° or less.

4. Device as claimed in any of the foregoing claims, **characterized in that** the tooth points of the teeth of both cutter plates of a pair lie at least virtually in the same horizontal plane.

5. Device as claimed in claims 2-4, **characterized in that** the driving of movable cutter plates takes place in such a way that at the ends of each stroke the teeth of co-acting cutter plates are positioned symmetrically relative to the point halfway between the points of teeth that may or may not be successively positioned, such that co-acting cutting edges perform successive scissor-like movements.

6. Device as claimed in any of the foregoing claims, **characterized in that** the cutting edges of adjoining teeth of a cutter plate are bounded by a concave surface which is sloping relative to the relevant cutter plate and which is situated on the surface of the relevant cutter plate facing away from the other cutter plate, such that the sloping faces adjoin one another and the relevant cutter plate comes to a sharp point on one side over the whole of the portion furnished with teeth.

7. Device as claimed in claim 6, **characterized in that** a sloping surface possesses the form of a portion of a cylinder surface such that the associated cutting edge has the shape of a part-ellipse.

8. Device as claimed in calim 6 or 7, **characterized in that** all the teeth of a pair have the same form.

9. Device as claimed in any of the foregoing claims, **characterized in that** the driving of a movable cutter plate is performed by means of a cylinder-piston assembly having a great stroke length relative to the pitch distance of the teeth, such that said cylinder-piston assembly may have a comparatively great length and smaller diameter.

10. Device as claimed in any of the foregoing claims, **characterized in that** the teeth of the co-acting cutter plates are placed with respect to one another, for example in relatively staggered groups, such that the cutting or scissor action takes place step-wise seen in lengthwise direction.

11. Components, particularly cutter plates, evidently intended for use with a device as claimed in any of the foregoing claims.

fig.1

fig.6

13665-5

fig.2

fig.3

fig.4

13665-5

fig.5

fig.11

13665-5

fig.7

fig.8

13665-5

fig.9

fig.10

FIG.14

FIG.12

FIG.13

EP 0 341 350 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | EP-A-102437 (TRIOLIET - MULLOS)<br>* page 5, line 7 - page 7, line 36; figures 1, 2, 5, 6 * | 1, 2, 4, 6, 7, 8, 9, 11 | A01F25/20 |
| X | DE-A-3344406 (STRAUTMANN)<br>* page 3; figures 1-4 * | 1, 3, 4, 5, 6, 7, 10, 11 | |
| P,X | DE-A-3643353 (STRAUTMANN)<br>* column 2, line 8 - line 68; figures 1-5 * | 1, 2, 3, 5, 6, 7, 8, 9, 11 | |

TECHNICAL FIELDS
SEARCHED (Int. Cl.4)

A01F

The present search report has been drawn up for all claims

| Place of search | Date of completion of the search | Examiner |
|---|---|---|
| THE HAGUE | 24 JULY 1989 | VERMANDER R.H. |

EPO FORM 1503 03.82 (P0401)